# EUROPEAN PATENT APPLICATION

(11) **EP 4 614 945 A1**
(43) Date of publication of application: **10.09.2025**
(21) Application number: 23896690.7
(22) Date of filing: 24.11.2023
(51) Int. Cl.: H04L 61/5046, H04L 61/5007

(54) **ADDRESS ALLOCATION METHOD AND APPARATUS, AND USER PLANE FUNCTION ENTITY**

(30) Priority: 01.12.2022 CN 202211530852
(71) Applicant: ZTE CORPORATION, Shenzhen, Guangdong 518057 (CN)
(72) Inventor: FANG, Yue, Shenzhen, Guangdong 518057 (CN)
(74) Representative: Ziebig Hengelhaupt Intellectual Property Attorneys Patentanwaltskanzlei PartGmbB
(86) International application number: PCT/CN2023/134079
(87) International publication number: WO 2024/114539

(57) **Abstract**

The present application belongs to the technical field of communications. Disclosed are an address allocation method and apparatus, and a user plane function entity. The method comprises: a user plane function receiving a session policy message, which is sent by a session management function, wherein the session policy message carries a private-network universal resource locator (410); the user plane function acquiring a first **IP** address according to the session policy message, wherein the first **IP** address is an **IP** address corresponding to the private network universal resource locator (420); and the user plane function allocating a second **IP** address according to the first **IP** address, wherein the second **IP** address is different from the first **IP** address (430).

## Description

### CROSS-REFERENCE TO RELATED APPLICATIONS

The present application claims priority to the Chinese patent application No. 202211530852.2, filed to the China National Intellectual Property Administration on December 1, 2022 and entitled "ADDRESS ALLOCATION METHOD AND APPARATUS, AND USER PLANE FUNCTION ENTITY", which is incorporated herein by reference in its entirety.

### TECHNICAL FIELD

The present application belongs to the technical field of communications, and particularly relates to an address allocation method and apparatus, and a user plane function entity.

### BACKGROUND

A network-side private network data network name (DNN) session scheme is widely used because it can help user equipment (UE) realize insensitive switching between a private network and a public network without modifying terminal and bearer data.

In the related art, when a network-side private network DNN session is realized, a session management function (SMF) may usually randomly allocate an IP address to UE accessing the session. However, the IP address allocated in this allocation method often conflicts with an IP address corresponding to a private network universal resource locator (URL).

### SUMMARY

Via an address allocation method and apparatus, and an electronic device provided by embodiments of the present application, the problem that in the related art, an allocated IP address conflicts with an IP address corresponding to a private network URL can be solved.

In a first aspect, an embodiment of the present application provides an address allocation method. The method includes: receiving, by a user plane function, a session policy message sent by a session management function, where the session policy message carries a private network universal resource locator; acquiring, by the user plane function, a first IP address based on the session policy message, where the first IP address is an IP address corresponding to the private network universal resource locator; and allocating, by the user plane function, a second IP address based on the first IP address, where the second IP address is different from the first IP address.

In a second aspect, an embodiment of the present application provides an address allocation method. The method includes: receiving, by a session management function, a session policy message sent by a policy control function, where the session policy message carries a private network universal resource locator; and sending, by the session management function, the session policy message to a user plane function, so that the user plane function acquires a first IP address based on the session policy message, where the first IP address is an IP address corresponding to the private network universal resource locator; and allocating, by the user plane function, a second IP address based on the first IP address, where the second IP address is different from the first IP address.

In a third aspect, an embodiment of the present application provides an address allocation apparatus. The apparatus includes: a receiving module configured to receive a session policy message sent by a session management function, where the session policy message carries a private network universal resource locator; an acquiring module configured to acquire a first IP address based on the session policy message, where the first IP address is an IP address corresponding to the private network universal resource locator; and an allocation module configured to allocate a second IP address based on the first IP address, where the second IP address is different from the first IP address.

In a fourth aspect, an embodiment of the present application provides a user plane function entity. The user plane function entity includes a processor and a memory, where the memory stores a program or instructions, and the program or instructions, when executed by the processor, implement the steps of the method as described in the first aspect.

In a fifth aspect, an embodiment of the present application provides a readable storage medium. The readable storage medium stores a program or instructions, and the program or instructions, when executed by a processor, implement the steps of the method as described in the first aspect or the second aspect.

In a sixth aspect, an embodiment of the present application provides a chip. The chip includes a processor and a communication interface, where the communication interface is coupled to the processor, and the processor is used to run a program or instructions to implement the method as described in the first aspect or the second aspect.

In a seventh aspect, an embodiment of the present application provides a computer program product. The computer program product is stored in a storage medium, and the program product is executed by at least one processor to implement the method as described in the first aspect or the second aspect.

### BRIEF DESCRIPTION OF DRAWING(S)

FIG. 1 is a schematic diagram of a network-side private network DNN session function provided in the related art;
FIG. 2 is a schematic diagram of a service flow provided on the basis of FIG. 1;
FIG. 3 is a structural diagram of network topology provided by an embodiment of the present application;
FIG. 4 is a flowchart of an address allocation method provided by an embodiment of the present application;
FIG. 5 is a flowchart of another address allocation method provided by an embodiment of the present application;
FIG. 6 is a flowchart of yet another address allocation method provided by an embodiment of the present application;
FIG. 7 is a flowchart of yet another address allocation method provided by an embodiment of the present application;
FIG. 8 is a schematic interaction diagram of an address allocation process provided by an embodiment of the present application;
FIG. 9 is a schematic interaction diagram of another address allocation process provided by an embodiment of the present application;
FIG. 10 is a structural block diagram of an address allocation apparatus provided by an embodiment of the present application; and
FIG. 11 is a structural block diagram of a user plane function entity provided by an embodiment of the present application.

### DETAILED DESCRIPTION

The technical solutions of the embodiments of the present application will be clearly described below with reference to the accompanying drawings of the embodiments of the present application. Apparently, the embodiments described are a part of the embodiments of the present application, rather than all of the embodiments. Based on the embodiments of the present application, all other embodiments obtained by a person of ordinary skill in the art fall within the scope of protection of the present application.

The terms "first", "second", and the like in the description and the claims of the present application are used for distinguishing between similar objects and not necessarily for describing a particular sequential or chronological order. It should be understood that data so used may be interchangeable, where appropriate, so that embodiments of the present application can be carried out in an order other than those illustrated or described herein, and that objects distinguished by "first", "second", etc., are generally of one kind and the number of objects is not limited, for example, the first object may be one or more than one. In addition, "and/or" in the specification and the claims indicates at least one of connected objects, and the character "/" generally indicates an "or" relationship between associated objects.

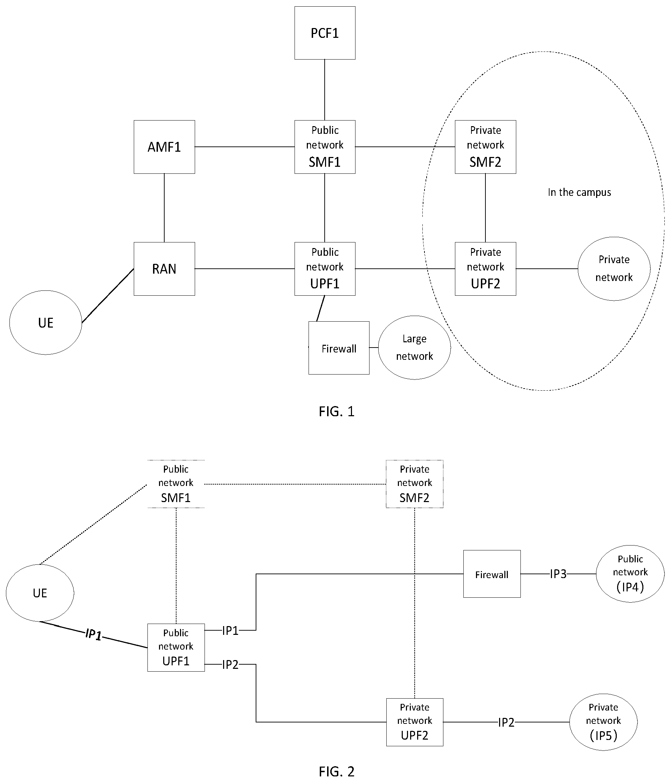

FIG. 1 is a schematic diagram of a network-side private network DNN session function provided in the related art. As shown in FIG. 1, when a user signs up for a private network service, a policy control function (PCF) 1 may transmit multi-DNN session policy messages, such as specified URLs (i.e., service URLs in IP format, fully qualified domain name (FQDN) format, etc.), a private network access point name (APN) and a slice, to an SMF1 network element at an interface N7 based on signing information. SMF1 may send received private network DNN rules to a public network user plane function (UPF) 1 via signaling on an interface N4. When the user accesses the private network DNN service, the public network UPF1 may trigger the detection and reports to a public network SMF1, the public network SMF1 may trigger the establishment of a private network DNN session, and SMF2 is selected as an anchor SMF of the private network session.

The SMF1 may allocate UE IP1 to a public network session, and the SMF2 may allocate UE IP2 to the private network session. When the user accesses the private network, an uplink message may perform address translation IP1>IP2 on the public network UPF1, and a downlink message may perform address translation IP2>IP1 on the public network UPF1.

FIG. 2 is a schematic diagram of a service flow provided on the basis of FIG. 1. As shown in FIG. 2, FIG. 2 includes two service flows, i.e., a public network service flow and a private network service flow. In addition, the dotted line in FIG. 2 may be used to indicate signaling and the solid line may be used to indicate data. The public network service flow involves IP1, IP3 and IP4, where IP1, IP3 and IP4 are all public network IP addresses. A UE side involves two addresses, i.e., IP1 and IP4, and a public network server side involves two addresses, i.e., IP3 and IP4, so there is no IP conflict on either the UE side or the public network server side.

The private network service flow involves IP1, IP2, and IP5 (IP addresses corresponding to a private network URL), where IP1, IP2, and IP5 are all private network IP addresses. The UE side involves two addresses, i.e., IP1 and IP5; and a private network server side involves two addresses, i.e., IP2 and IP5. Since IP1 on the UE side is randomly allocated by SMF1, IP1 may conflict with IP5. Once IP1 conflicts with IP5, an uplink message of UE accessing the private network will fail to be sent.

In view of this, embodiments of the present application creatively provide an address allocation method and apparatus, and a user plane function entity, which can effectively avoid a conflict between an IP address of target UE and an IP address corresponding to a private network URL.

The address allocation method and apparatus, and the user plane function entity provided by the embodiments of the present application are described in detail below in conjunction with the accompanying drawings via specific embodiments and application scenarios thereof.

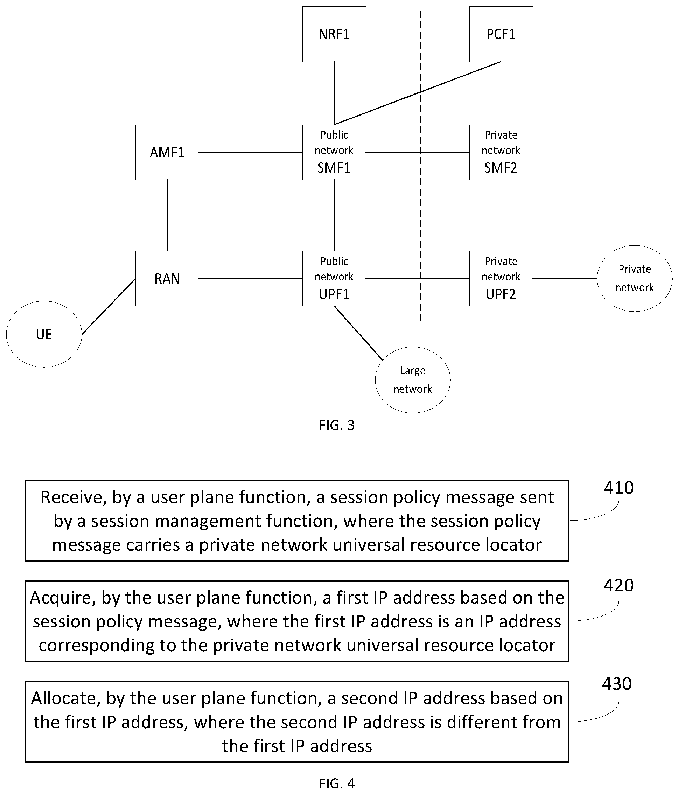

FIG. 3 is a structural diagram of network topology provided by an embodiment of the present application. The network topology may include target UE, a radio access network (RAN), an access mobility management function (AMF) 1, a network repository function (NRF) 1, PCF1, public network SMF1, private network SMF2, public network UPF1, private network UPF2, a private network, and a large network (public network). The left side of the dotted line in FIG. 3 may indicate a private network roaming location corresponding to the target UE, and the right side of the dotted line may indicate a private network home location corresponding to the target UE. FIG. 3 corresponds to a scenario where the target UE is accessed at the private network roaming location. Taking a private network URL (service URL) in FQDN format as an example, in this scenario, PCF1 may send a private network DNN session policy to the public network SMF1. The public network SMF1 may send the received private network DNN session policy to the public network UPF1 via the interface N4. Thus, the public network UPF1 may perform active DNS learning on the service URL in FQDN format in the received private network DNN session policy and allocate an IP address to the target UE, so as to avoid a conflict between the IP address of the target UE and the IP address corresponding to the service URL in FQDN format.

The public network UPF1 performing active DNS learning may include: when the service URL sent by the PCF1 is in FQDN format, the public network UPF1 actively learns the IP address corresponding to the service URL in FQDN format via a DNS request message. The public network UPF1 allocates an address in a way that may be the address allocation method recommended in the 16th public version of the 3rd generation partnership project (3GPP) protocol. After the public network UPF1 learns the IP address corresponding to the service URL in FQDN format, the public network UPF1 may allocate, to the target UE, an IP address that does not conflict with the learned IP address.

According to the address allocation method provided by the embodiment of the present application, the IP address corresponding to the service URL in FQDN format can be acquired through active DNS learning by the public network UPF1, and an IP address that does not conflict with the IP address corresponding to the service URL is allocated to the target UE according to the IP address corresponding to the service URL, so that the target UE can access the private network normally.

It is to be noted that the address allocation method described above is only an example of the present application and cannot be regarded as a limitation of the present application. In fact, the public network UPF1 may acquire the IP address corresponding to the service URL in a variety of ways, and the address allocation method provided by the embodiments of the present application is applicable not only to the service URL in FQDN format, but also to the service URL in IP format. The following sections will introduce them one by one.

FIG. 4 is a flowchart of an address allocation method provided by an embodiment of the present application. As shown in FIG. 4, the address allocation method provided by the embodiment of the present application may include the steps as follows.

In step 410, a user plane function receives a session policy message sent by a session management function, where the session policy message carries a private network universal resource locator.

In the embodiment of the present application, both the SMF and the UPF may support a private network to establish a network-side private network session locally or in a roaming location. The SMF may be a public network SMF, such as the public network SMF1 shown in FIG. 3. The UPF may be a public network UPF, such as the public network UPF1 shown in FIG. 3.

When target UE accesses the private network, the UPF may receive the session policy message sent by the SMF. The session policy message may be actively sent to the SMF by the PCF, or returned to the SMF after receiving a request from the SMF.

The session policy message may carry a private network DNN policy. The private network DNN policy may include the private network URL. In addition to the private network URL, the private network DNN policy may include at least one of a private network DNN and a private network slice.

The private network URL may be a URL in FQDN format, a URL in IP format, or a URL in subdomain format.

In step 420, the user plane function acquires a first IP address based on the session policy message, where the first IP address is an IP address corresponding to the private network universal resource locator.

The first IP address may be at least one IP address, or one IP address field. The at least one IP address may be a single IP address, such as 119.147.50.92, or a plurality of IP addresses, such as 180.97.33.107 and 180.97.33.108.

In the case where the private network URL carried in the session policy message is a locator in target format (such as FQDN format), the UPF may first extract the locator in target format from the session policy message, and then acquire the first IP address corresponding to the locator in target format by means of a DNS or a preset mapping table. The mapping table may store a correspondence relationship between the locator in target format and the IP address.

In the case where the private network URL carried in the session policy message is a locator in IP format, the UPF may directly acquire the first IP address corresponding to the locator in IP format from the session policy message.

In step 430, the user plane function allocates a second IP address based on the first IP address, where the second IP address is different from the first IP address.

The second IP address may be an address allocated by the UPF to the target UE in the network-side private network session. If the second IP address is different from the first IP address, it may indicate that the second IP address is different from any one of first IP addresses, that is, the second IP address does not conflict with the first IP address, and the first IP address does not contain the same IP address as the second IP address.

After the first IP address is determined, the UPF may allocate the second IP address that is different from the first IP address in at least two methods as follows. Method 1: the UPF may determine IP addresses in a pre-configured IP address list that conflict with the first IP address, remove or mask the IP addresses that conflict with the first IP address from the pre-configured IP address list, and then select an IP address from the remaining IP address list as the second IP address. Method 2: the UPF may randomly select an IP address from the pre-configured IP address list and check whether the selected IP address conflicts with the first IP address. If no conflict exists, the selected IP address is used as the second IP address. If there is a conflict, the UPF continues to select an IP address until the randomly selected IP address does not conflict with the first IP address. Finally, the randomly selected IP address that does not conflict with the first IP address is used as the second IP address.

According to the address allocation method provided by the embodiments of the present application, the first IP address corresponding to the private network universal resource locator can be acquired based on the session policy message, and further, the user plane function allocates the second IP address that is different from the first IP address in a targeted manner based on the first IP address, so as to ensure that the first IP address does not conflict with the second IP address in the course of a session, and accordingly a device corresponding to the second IP address can access the private network normally.

It is also to be noted that, compared with the prior art, the address allocation method provided by the embodiment of the present application for avoiding address conflicts is not limited to the private network URL in IP format, but is also applicable to a private network URL in domain name format, which can enhance the experience of users of the public network in accessing the private network. Meanwhile, since most private network service URLs for governments, enterprises, and campuses are in FQDN format (which is more secure than the pure IP address format), the present application can also further promote the popularization of the network-side private network DNN session function in the intranets of governments, enterprises, and campuses.

In some scenarios, such as a scenario in which a user of the public network signs up for a private network service after going online for a large network session through target UE, in order to ensure that the network-side private network session is normal, address conflict detection may be performed before determining whether to reallocate an IP address to the target UE. In one embodiment of the present application, before step 430, where the user plane function allocates the second IP address based on the first IP address, the address allocation method further includes: the user plane function acquires a third IP address, where the third IP address is an IP address that has been allocated to the target UE. The user plane function allocating the second IP address based on the first IP address includes: the second IP address is allocated in the case where the first IP address conflicts with the third IP address. In this way, in the case where an IP address has been allocated to the target UE, it may be further determined whether the IP address that has been allocated conflicts with the first IP address, and in the case where there is a conflict, an IP address is reallocated to the target UE, so as to ensure that the IP address of the target UE does not conflict with the IP address corresponding to the private network URL in the course of the network-side private network session, so that the target UE may access the private network normally.

The third IP address may be an IP address of the target UE in the public network service flow, such as an address allocated by the SMF or the UPF to the target UE when a user who has not signed up for the private network service goes online for the large network session through the target UE. The first IP address conflicting with the third IP address may indicate that an address identical to the third IP address exists in the first IP address.

In the case where the first IP address does not conflict with the third IP address, the third IP address may be directly used as the second IP address without reallocation.

As described above, the private network URL may be a locator in a variety of formats. The first IP address is acquired in different ways for locators in different formats. Thus, the specific process of acquiring the first IP address based on private network URLs in different formats will be further described hereinafter in the present application. In one embodiment of the present application, the private network universal resource locator is a locator in IP format, and step 420, where the user plane function acquires the first IP address based on the session policy message, may include: extracting, by the user plane function, the locator in IP format from the session policy message, and taking the locator in IP format as the first IP address. In this way, the UPF may quickly acquire the first IP address without adding additional signaling interactions, which is conducive to improving the efficiency of address allocation.

After the UPF allocates the second IP address, the second IP address may be reported to other network elements in the network-side private network session. In one embodiment of the present application, after step 430, where the user plane function allocates the second IP address based on the first IP address, the address allocation method further includes: the user plane function sends a target message to the session management function, where the target message carries the second IP address. In this way, the UPF may report the allocated second IP address to the SMF, and the SMF may further transmit the IP address of the target UE to other network elements to ensure normal signaling transmission.

After the UPF allocates the second IP address, the target message carrying the second IP address may be sent to the SMF. Meanwhile, the SMF may send a session policy update message to the PCF after receiving the target message, where the session policy update message carries the second IP address. The PCF may return a success response to the SMF after receiving the session policy update message.

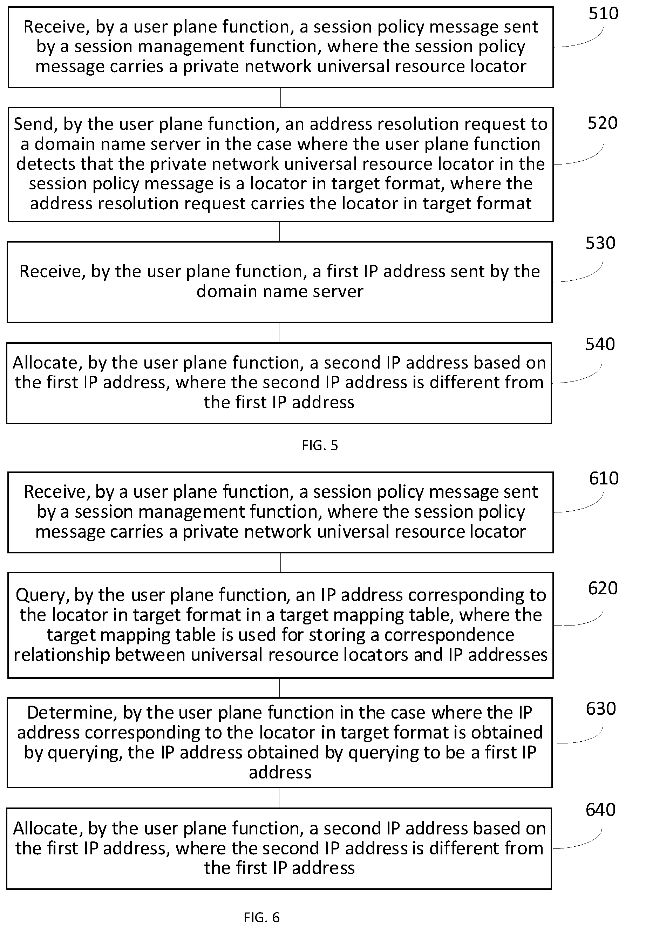

FIG. 5 is a flowchart of another address allocation method provided by an embodiment of the present application. As shown in FIG. 5, the address allocation method provided by the embodiment of the present application includes the steps as follows.

In step 510, a user plane function receives a session policy message sent by a session management function, where the session policy message carries a private network universal resource locator.

The private network universal resource locator is a locator in target format.

The target format may be FQDN format.

In step 520, the user plane function sends an address resolution request to a domain name server in the case where the user plane function detects that the private network universal resource locator in the session policy message is a locator in target format, where the address resolution request carries the locator in target format.

The domain name server (DNS) may be a server used for translating a domain name and an IP address corresponding thereto. The address resolution request may be used for instructing the DNS to resolve the locator in target format to the corresponding IP address.

If the private network URL in the session policy message is the locator in target format, the UPF may send the address resolution request carrying the locator in target format to the DNS. Thus, the domain name server may resolve the acquired locator in target format and determine the corresponding IP address. In the embodiment of the present application, a DNS address may be configured on the UPF, so that the UPF can proactively send the address resolution request to the DNS corresponding to the address after detecting the locator in target format.

In step 530, the user plane function receives a first IP address sent by the domain name server.

The first IP address is an IP address corresponding to the locator in target format.

The first IP address resolved by the DNS may be a single IP address, a plurality of IP addresses, or an IP address field. After receiving the first IP address sent by the DNS, the UPF may perform the following steps.

In step 540, the user plane function allocates a second IP address based on the first IP address, where the second IP address is different from the first IP address.

For details about how to allocate the second IP address, refer to step 430 above, which will not be repeated here.

According to the address allocation method provided in the embodiment of the present application, the DNS can be used to resolve the locator in target format and accurately acquire the first IP address corresponding to the locator in target format, which is conducive to allocating the second IP address that is different from the first IP address in a targeted manner based on the first IP address, so that it can be ensured that the first IP address does not conflict with the second IP address during a session, and accordingly a device corresponding to the second IP address can access the private network normally.

Since the UPF may detect the same locator in target format carried in the session policy message at different time nodes, by recording the locator in target format in the UPF and receiving the first IP address corresponding to the locator in target format from the DNS, it may be avoided that the same address resolution request is sent to the DNS repeatedly. In one embodiment of the present application, after step 540, the address allocation method further includes: recording, by the user plane function, a correspondence relationship between the locator in target format and the first IP address in a target mapping table. In this way, by learning the correspondence relationship between the locator in target format and the first IP address, the target mapping table is generated, and the UPF can directly use the target mapping table to acquire some IP addresses corresponding to the locator in target format, which reduces signaling interaction and can improve the efficiency of address allocation to a certain extent.

FIG. 6 is a flowchart of yet another address allocation method provided by an embodiment of the present application. As shown in FIG. 6, the address allocation method provided by the embodiment of the present application includes the following steps:
In step 610, a user plane function receives a session policy message sent by a session management function, where the session policy message carries a private network universal resource locator.

The private network universal resource locator is a locator in target format.

The target format may be FQDN format.

In step 620, the user plane function queries an IP address corresponding to the locator in target format in a target mapping table, where the target mapping table is used for storing a correspondence relationship between universal resource locators and IP addresses.

The URLs in the target mapping table may include at least one locator in target format. The correspondence relationship between the URLs and the IP addresses in the target mapping table may be one-to-one or one-to-many.

When querying the target mapping table, the UPF may use the locator in target format as the index to check whether an IP address corresponding to the locator in target format exists in the target mapping table.

In step 630, the user plane function determines, in the case where the IP address corresponding to the locator in target format is obtained by querying, the IP address obtained by querying to be a first IP address.

It is to be understood that when the target mapping table includes a URL coincident with the locator in target format and an IP address corresponding to the URL, the UPF may obtain the corresponding IP address by querying.

In this case, the UPF may directly use the target mapping table to acquire the first IP address.

In step 640, the user plane function allocates a second IP address based on the first IP address, where the second IP address is different from the first IP address.

According to the address allocation method provided in the embodiment of the present application, by querying the IP address corresponding to the locator in target format in the target mapping table, the UPF can preferably use the target mapping table to perform address resolution instead of sending unnecessary address resolution requests to a DNS, thereby reducing the signaling interaction between the UPF and the DNS, and improving the efficiency of address allocation to a certain extent.

Optionally, in one embodiment of the present application, the operation of acquiring the first IP address based on the session policy message also includes: sending, by the user plane function, an address resolution request to the domain name server in the case where the user plane function fails to obtain the IP address corresponding to the locator in target format by querying, where the address resolution request carries the locator in target format; and receiving, by the user plane function, the first IP address sent by the domain name server. In this way, in the case where information in the target mapping table is limited, the DNS may continue to be used to resolve the locator in target format, which ensures that the UPF can accurately acquire the first IP address corresponding to the locator in target format.

It is to be understood that when the target mapping table does not include a URL coincident with the locator in target format, the UPF may not query the IP address corresponding to the locator in target format.

In this case, the UPF may continue to send the address resolution request carrying the locator in target format to the DNS and receive the first IP address corresponding to the locator in target format from the DNS.

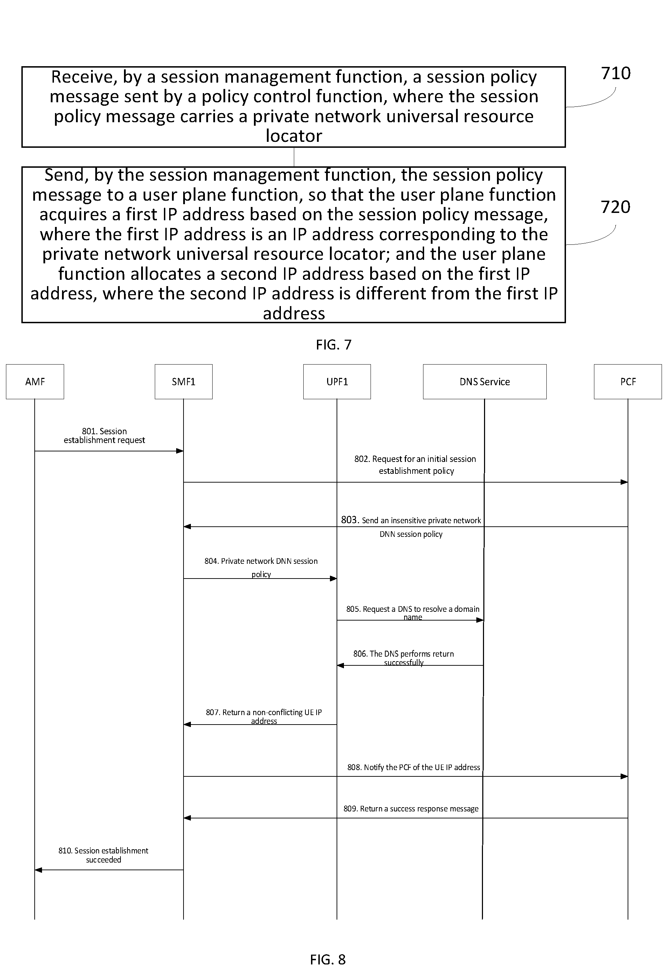

FIG. 7 is a flowchart of yet another address allocation method provided by an embodiment of the present application. As shown in FIG. 7, the address allocation method provided by the embodiment of the present application includes the steps as follows.

In step 710, a session management function receives a session policy message sent by a policy control function, where the session policy message carries a private network universal resource locator.

The session policy message may be actively sent to the SMF by the PCF, or returned to the SMF after receiving a request from the SMF.

The session policy message may carry a private network DNN policy. The private network DNN policy may include the private network URL. In addition to the private network URL, the private network DNN policy may include at least one of a private network DNN and a private network slice.

The private network URL may be a URL in FQDN format, a URL in IP format, or a URL in subdomain format.

In step 720, the session management function sends the session policy message to a user plane function, so that the user plane function acquires a first IP address based on the session policy message, where the first IP address is an IP address corresponding to the private network universal resource locator; and the user plane function allocates a second IP address based on the first IP address, where the second IP address is different from the first IP address.

The first IP address may be at least one IP address, or one IP address field.

In the case where the private network URL carried in the session policy message is a locator in target format (such as FQDN format), the UPF may first extract the locator in target format from the session policy message, and then acquire the first IP address corresponding to the locator in target format via a DNS or a preset mapping table. The mapping table may store a correspondence relationship between the locator in target format and the IP address.

In the case where the private network URL carried in the session policy message is a locator in IP format, the UPF may directly acquire the first IP address corresponding to the locator in IP format from the session policy message.

The second IP address may be an address allocated by the UPF to target UE in a network-side private network session. If the second IP address is different from the first IP address, it may indicate that the second IP address is different from any one of first IP addresses, that is, the second IP address does not conflict with the first IP address, and the first IP address does not contain the same IP address as the second IP address.

According to the address allocation method provided by the embodiment of the present application, the UPF acquires the first IP address corresponding to the private network universal resource locator based on the session policy message, and further allocates the second IP address that is different from the first IP address in a targeted manner based on the first IP address, so as to ensure that the first IP address does not conflict with the second IP address in the course of a session, and accordingly a device corresponding to the second IP address can access the private network normally.

Optionally, in one embodiment of the present application, the address allocation method further includes: sending, by the session management function, a request message to the user plane function, where the request message is used for requesting the user plane function to allocate an IP address. In this way, the UPF may allocate an IP address based on the request message sent by the SMF.

After the second IP address is determined, the second IP address may be transmitted to other network elements in the network-side private network session. In one embodiment of the present application, after step 720, where the session management function sends the session policy message to the user plane function, the address allocation method further includes: receiving, by the session management function, a target message of the user plane function, where the target message carries the second IP address; and sending, by the session management function, a session policy update message to the policy control function, where the session policy update message carries the second IP address. In this way, the SMF may receive the second IP address sent by the UPF and further transmit the IP address of the target UE to other network elements in the network-side private network session to ensure normal signaling transmission.

After the UPF allocates the second IP address, the SMF may receive the target message carrying the second IP address returned by the UPF and send the session policy update message to the PCF, where the session policy update message carries the second IP address. The PCF may return a success response to the SMF after receiving the session policy update message.

For ease of understanding, the address allocation method provided by the embodiment of the present application is described in detail below based on specific scenarios and interactive processes.

FIG. 8 is a schematic interaction diagram of an address allocation process provided by an embodiment of the present application. FIG. 8 shows a scenario in which a user that has signed up for a private network goes online for a large-network session. Taking a private network URL (service URL) in FQDN format as an example, in this scenario, the address allocation process in the embodiment of the present application may include the steps as follows.

In step 801, the user that has signed up for the private network initiates a session establishment request, and an AMF sends a session establishment request message to SMF1 (corresponding to the session management function above).

It is to be understood that the user that has signed up for the private network may initiate the session establishment request through target UE.

In step 802, SMF1 sends a session policy information acquiring request (corresponding to the session policy message above) to the PCF.

In step 803, the PCF returns a response message to SMF1, where the response message carries session policy information, and the session policy information includes a private network DNN policy (a private network DNN, a private network slice and a private network service URL, where the private network service URL is in FQDN format) signed up by the user.

In step 804, SMF1 sends the private network DNN policy to UPF1 (corresponding to the user plane function above) through a packet forwarding control protocol (PFCP) message, and meanwhile, requests UPF1 to allocate UE IP.

In step 805, UPF1 actively sends, when detecting that the service URL (corresponding to the private network URL above) in the private network DNN session policy is in FQDN format, a request to a DNS to resolve an IP address corresponding to the FQDN of the service URL.

In step 806, the DNS returns the IP address (corresponding to the first IP address above) corresponding to the FQDN of the service URL to UPF1.

In step 807, UPF1 allocates UE IP addresses, implements address conflict prevention during allocation, allocates an address (corresponding to the second IP address above) that does not conflict with the IP address corresponding to the FQDN, returns a session policy successfully installed message to SMF1, and returns the successfully allocated UE IP to SMF1.

In step 808, SMF1 sends a session policy update message to the PCF and meanwhile carries the allocated UE IP.

In step 809, the PCF returns a success response to SMF1.

In step 810, SMF1 returns a session establishment success response message to AMF1.

According to the address allocation method provided by the embodiment of the present application, on the one hand, the UPF can allocate an IP address to the target UE, and on the other hand, the DNS can be used to resolve the locator in FQDN format and accurately acquire the IP address corresponding to the locator in FQDN format, so that the UPF can allocate nonconflicting IP addresses to the target UE based on the IP address corresponding to the locator in FQDN format, and accordingly it can be ensured that the target UE can access the private network normally after the IP address is allocated.

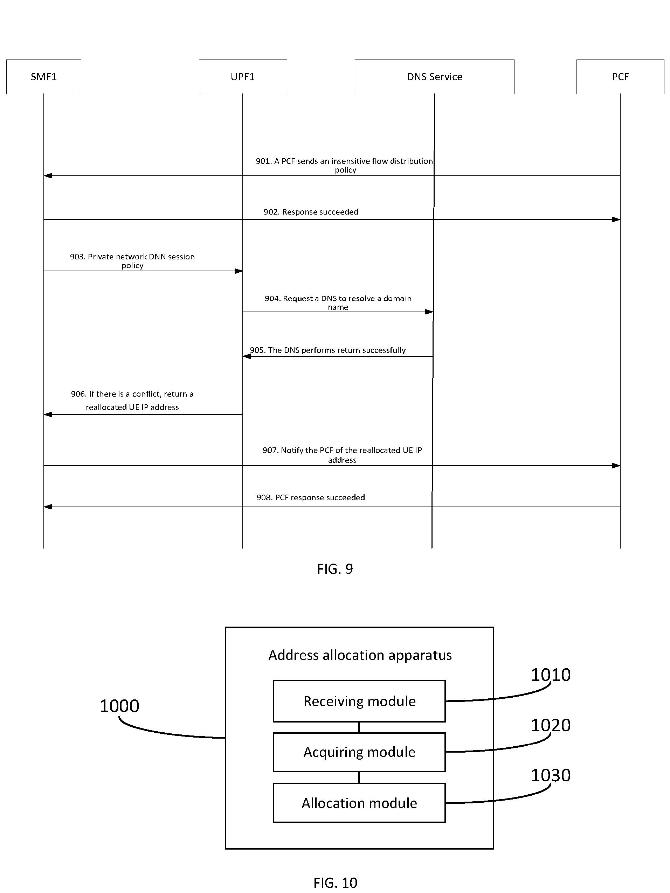

FIG. 9 is a schematic interaction diagram of another address allocation process provided by an embodiment of the present application. FIG. 9 shows a scenario in which after a user that does not sign up for the private network goes online for a large-network session, the user signs up for a private network service, and a PCF actively sends a private network DNN policy. Taking a private network URL (service URL) in FQDN format as an example, in this scenario, the address allocation process in the embodiment of the present application may include the steps as follows.

In step 901, after the user signs up for the private network DNN service, the PCF actively sends the private network DNN policy (corresponding to the private network session policy message above) to SMF1 that carries the service URL in FQDN format.

In step 902, the large-network session SMF1 responds successfully.

In step 903, SMF1 sends the private network DNN policy to UPF1 through a PFCP message.

In step 904, UPF1 actively sends, when detecting that the service URL (corresponding to the private network URL above) in the private network DNN session policy is in FQDN format, a request to a DNS to resolve an IP address corresponding to the FQDN of the service URL.

In step 905, the DNS returns the IP address (corresponding to the first IP address above) corresponding to the FQDN of the service URL to UPF1.

In step 906, UPF1 performs address conflict detection. If the IP corresponding to the FQDN of the service URL conflicts with a current UE IP address (corresponding to the third IP address above) of the session, a UE IP address is reallocated, that is, UE IP (corresponding to the second IP address above) that does not conflict with the IP address corresponding to the FQDN is reallocated, and the reallocated UE IP is returned to SMF1.

In step 907, SMF1 sends a session policy update message to the PCF, where the session policy update message carries the reallocated UE IP.

In step 908, the PCF returns a success response to SMF1.

According to the address allocation method provided by the embodiment of the present application, in the case where an IP address has been allocated to the target UE, it may be further determined whether the IP address that has been allocated conflicts with the IP address corresponding to the private network URL, and if there is a conflict, an IP address different from the previous address is reallocated for the target UE, so as to ensure that the IP address of the target UE does not conflict with the IP address corresponding to the private network URL in the course of the network-side private network session, so that the target UE can access the private network normally.

FIG. 10 is a structural block diagram of an address allocation apparatus provided by an embodiment of the present application. As shown in FIG. 10, the address allocation apparatus 1000 provided by the embodiment of the present application includes: a receiving module 1010, an acquiring module 1020 and an allocation module 1030.

The receiving module 1010 is configured to receive a session policy message sent by a session management function, where the session policy message carries a private network universal resource locator.

The acquiring module 1020 is configured to acquire a first IP address based on the session policy message, where the first IP address is an IP address corresponding to the private network universal resource locator.

The allocation module 1030 is configured to allocate a second IP address based on the first IP address, where the second IP address is different from the first IP address.

According to the address allocation apparatus provided by the embodiments of the present application, the first IP address corresponding to the private network universal resource locator can be acquired based on the session policy message, and further, the second IP address that is different from the first IP address can be allocated in a targeted manner based on the first IP address, so as to ensure that the first IP address does not conflict with the second IP address in the course of a session, so that a device corresponding to the second IP address can access the private network normally.

Optionally, in one embodiment of the present application, before the second IP address is allocated based on the first IP address, the acquiring module 1020 is further configured to: acquire a third IP address, where the third IP address is an IP address that has been allocated to target UE. In the process of allocating the second IP address based on the first IP address, the allocation module 1030 is specifically configured to: allocate the second IP address in the case where the first IP address conflicts with the third IP address.

Optionally, in one embodiment of the present application, the private network universal resource locator is a locator in target format, and in the process of acquiring the first IP address based on the session policy message, the acquiring module 1020 is specifically configured to: send an address resolution request to a domain name server in the case of detecting that the private network universal resource locator in the session policy message is a locator in target format, where the address resolution request carries the locator in target format; and receive a first IP address sent by the domain name server.

Optionally, in one embodiment of the present application, the address allocation apparatus 1000 further includes a storage module. The storage module is configured to record a correspondence relationship between the locator in target format and the first IP address in a target mapping table after the first IP address sent by the domain name server is received.

Optionally, in one embodiment of the present application, the private network universal resource locator is a locator in target format, and in the process of acquiring the first IP address based on the session policy message, the acquiring module 1020 is specifically configured to: query an IP address corresponding to the locator in target format in the target mapping table, where the target mapping table is used for storing a correspondence relationship between universal resource locators and IP addresses; and determine, in the case where the IP address corresponding to the locator in target format is acquired by querying, the IP address acquired by querying as the first IP address.

Optionally, in one embodiment of the present application, in the process of acquiring the first IP address based on the session policy message, the acquiring module 1020 is specifically configured to: send, in the case where no IP address corresponding to the locator in target format is obtained by querying, an address resolution request to the domain name server, where the address resolution request carries the locator in target format; and receive the first IP address sent by the domain name server.

Optionally, in one embodiment of the present application, the target format is a fully qualified domain name format.

Optionally, in one embodiment of the present application, the private network universal resource locator is a locator in IP format, and in the process that the user plane function acquires the first IP address based on the session policy message, the acquiring module 1020 is specifically configured to: extract, from the session policy message, the locator in IP format, and take the locator in IP format as the first IP address.

Optionally, in one embodiment of the present application, the address allocation apparatus 1000 further includes a sending module. The sending module is configured to send, after the second IP address is allocated based on the first IP address, a target message to the session management function, where the target message carries the second IP address.

In addition to the address allocation apparatus shown in FIG. 10, an embodiment of the present application provides another address allocation apparatus. The address allocation apparatus includes: a receiving module and a sending module.

The receiving module is configured to receive a session policy message sent by a policy control function, where the session policy message carries a private network universal resource locator.

The sending module is configured to send the session policy message to a user plane function, so that the user plane function acquires a first IP address based on the session policy message, where the first IP address is an IP address corresponding to the private network universal resource locator; and the user plane function allocates a second IP address based on the first IP address, where the second IP address is different from the first IP address.

Optionally, in one embodiment of the present application, the sending module is further configured to: send a request message to the user plane function, where the request message is used for requesting the user plane function to allocate an IP address.

Optionally, in one embodiment of the present application, after sending the session policy message to the user plane function, the receiving module is further configured to: receive a target message of the user plane function, where the target message carries the second IP address; and the sending module is further configured to: send a session policy update message to the policy control function, where the session policy update message carries the second IP address.

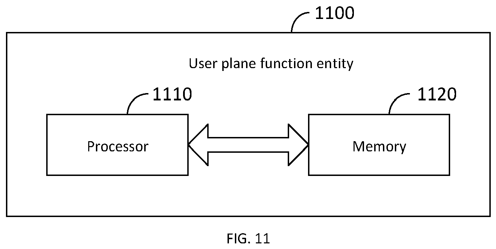

In addition, as shown in FIG. 11, an embodiment of the present application further provides a user plane function entity 1100. The user plane function entity 1100 may be various types of computers, etc. The user plane function entity 1100 includes a processor 1110 and a memory 1120. The memory 1120 stores a program or instructions stored, and the program or instructions, when executed by the processor 1110, implement the steps of any one of the address allocation methods described in FIG. 4 to FIG. 6.

An embodiment of the present application further provides a readable storage medium storing a program or instructions. The program or instructions, when executed by a processor 1110, implement the steps of any one of the address allocation methods described above.

Those skilled in the art will appreciate that the embodiments of the present application may be provided as methods, systems, or computer program products. Therefore, the present application may take the form of a full hardware embodiment, a full software embodiment, or an embodiment combining software and hardware. Besides, the present application may adopt the form of a computer program product implemented on one or more computer available storage media (including but not limited to a disk memory, a CD-ROM, an optical memory and the like) including computer available program codes.

The present application is described with reference to the flow diagram and/or block diagram of the method, device (system), and computer program product according to the embodiments of the present application. It should be understood that each flow and/or block in the flow diagram and/or block diagram and the combination of flows and/or blocks in the flow diagram and/or block diagram may be implemented by computer program instructions. These computer program instructions may be provided to processors of a general-purpose computer, a special-purpose computer, an embedded processor or other programmable data processing devices to generate a machine, such that instructions executed by processors of a computer or other programmable data processing devices generate an apparatus for implementing the functions specified in one or more flows of the flow diagram and/or one or more blocks of the block diagram.

These computer program instructions may also be stored in a computer-readable memory capable of guiding a computer or other programmable data processing devices to work in a specific manner, such that instructions stored in the computer-readable memory generate a manufactured product including an instruction apparatus, and the instruction apparatus implements the functions specified in one or more flows of the flow diagram and/or one or more blocks of the block diagram.

These computer program instructions may also be loaded on a computer or other programmable data processing devices, such that a series of operation steps are executed on the computer or other programmable devices to produce computer-implemented processing, and thus, the instructions executed on the computer or other programmable devices provide steps for implementing the functions specified in one or more flows of the flow diagram and/or one or more blocks of the block diagram.

In a typical configuration, a computing device includes one or more processors (CPUs), an input/output interface, a network interface, and an internal storage.

The internal storage may include a non-permanent memory, a random access memory (RAM) and/or a non-volatile memory, etc. in a computer readable medium, such as a read-only memory (ROM) or a flash memory (flash RAM). The internal storage is an example of the computer readable medium.

The computer readable medium includes permanent and non-permanent, removable and non-removable media, and may achieve information storage by any method or technology. Information may be computer-readable instructions, data structures, modules of programs, or other data. Examples of the computer storage medium include, but not limited to, a phase change memory (PRAM), a static random access memory (SRAM), a dynamic random access memory (DRAM), other types of random access memories (RAM), a read-only memory (ROM), an electrically erasable programmable read-only memory (EEPROM), a flash memory or other memory technology, an optical read-only memory (CD-ROM), a digital versatile disc (DVD) or other optical storage, magnetic cassette tape, disk storage or other magnetic storage devices or any other non-transmission media, which may be used for storing information that may be accessed by a computing device. As defined herein, the computer-readable medium does not include transitory media, such as modulated data signals and carriers.

It is also to be noted that the terms "comprise", "include", or any other variation thereof, are intended to cover a non-exclusive inclusion, such that a process, method, article, or apparatus that includes a list of elements not only include those elements, but also includes other elements not expressly listed or elements inherent to such process, method, article, or apparatus. In the absence of further restrictions, an element defined by the sentence "including a..." does not preclude the existence of additional identical elements in a process, method, product or device including the element.

The above is only an embodiment of the present application and is not intended to limit the present application. It will be apparent to those skilled in the art that various modifications and variations may be made to the present application. Any modifications, equivalents, improvements, etc. that come within the spirit and principle of the present application shall fall within the scope of the claims of the present application.

## Claims

1. An address allocation method, comprising:
receiving, by a user plane function, a session policy message sent by a session management function, wherein the session policy message carries a private network universal resource locator;
acquiring, by the user plane function, a first IP address based on the session policy message, wherein the first IP address is an IP address corresponding to the private network universal resource locator; and
allocating, by the user plane function, a second IP address based on the first IP address, wherein the second IP address is different from the first IP address.

2. The method according to claim 1, wherein before allocating, by the user plane function, a second IP address based on the first IP address, the method further comprises:
acquiring, by the user plane function, a third IP address, wherein the third IP address is an IP address that has been allocated to target UE; and
allocating, by the user plane function, the second IP address based on the first IP address comprises:
allocating the second IP address in a case where the first IP address conflicts with the third IP address.

3. The method according to claim 1, wherein the private network universal resource locator is a locator in target format; and acquiring a first IP address based on the session policy message comprises:
sending, by the user plane function, an address resolution request to a domain name server in a case where the user plane function detects that the private network universal resource locator in the session policy message is a locator in target format, wherein the address resolution request carries the locator in target format; and
receiving, by the user plane function, a first IP address sent by the domain name server.

4. The method according to claim 3, wherein after receiving, by the user plane function, a first IP address sent by the domain name server, the method further comprises:
recording, by the user plane function, a correspondence relationship between the locator in target format and the first IP address in a target mapping table.

5. The method according to claim 1, wherein the private network universal resource locator is a locator in target format; and acquiring a first IP address based on the session policy message comprises:
querying, by the user plane function, an IP address corresponding to the locator in target format in a target mapping table, wherein the target mapping table is used for storing a correspondence relationship between universal resource locators and IP addresses; and
determining, by the user plane function in a case where the IP address corresponding to the locator in target format is obtained by querying, the IP address obtained by querying to be a first IP address.

6. The method according to claim 5, wherein acquiring a first IP address based on the session policy message further comprises:
sending, by the user plane function, an address resolution request to a domain name server in a case where the user plane function fails to obtain the IP address corresponding to the locator in target format by querying, wherein the address resolution request carries the locator in target format; and
receiving, by the user plane function, a first IP address sent by the domain name server.

7. The method according to any one of claims 3 to 6, wherein target format is a fully qualified domain name format.

8. The method according to claim 1, wherein the private network universal resource locator is a locator in IP format, and acquiring, by the user plane function, a first IP address based on the session policy message comprises:
extracting, from the session policy message by the user plane function, the locator in the IP format, and using the locator in the IP format as a first IP address.

9. The method according to claim 1, wherein after allocating, by the user plane function, a second IP address based on the first IP address, the method further comprises:
sending, by the user plane function, a target message to the session management function, wherein the target message carries the second IP address.

10. An address allocation method, comprising:
receiving, by a session management function, a session policy message sent by a policy control function, wherein the session policy message carries a private network universal resource locator; and
sending, by the session management function, the session policy message to a user plane function, so that the user plane function acquires a first IP address based on the session policy message, wherein the first IP address is an IP address corresponding to the private network universal resource locator; and the user plane function allocates a second IP address based on the first IP address, wherein the second IP address is different from the first IP address.

11. The address allocation method according to claim 10, further comprising:
sending, by the session management function, a request message to the user plane function, wherein the request message is used for requesting the user plane function to allocate an IP address.

12. The address allocation method according to claim 10, wherein after sending, by the session management function, the session policy message to a user plane function, the method further comprises:
receiving, by the session management function, a target message from the user plane function, wherein the target message carries the second IP address; and
sending, by the session management function, a session policy update message to the policy control function, wherein the session policy update message carries the second IP address.

13. An address allocation apparatus, comprising:
a receiving module configured to receive a session policy message sent by a session management function, wherein the session policy message carries a private network universal resource locator;
an acquiring module configured to acquire a first IP address based on the session policy message, wherein the first IP address is an IP address corresponding to the private network universal resource locator; and
an allocation module configured to allocate a second IP address based on the first IP address, wherein the second **IP** address is different from the first **IP** address.

14. A user plane function entity, comprising a processor and a memory, wherein the memory stores a program or instructions, and the program or instructions, when executed by the processor, implement the steps of the method according to any one of claims 1 to 8.

15. A readable storage medium, having a program or instructions stored thereon, wherein the program or instructions, when executed, implement the steps of the method according to any one of claims 1 to 12.
